# EUROPEAN PATENT SPECIFICATION

(11) **EP 0 763 820 B1**
(45) Date of publication and mention of the grant of the patent: **12.08.1998**
(21) Application number: 96117255.8
(22) Date of filing: 30.04.1992
(51) Int. Cl.: G11B 5/596

(54) **Magnetic disk drive units**
Magnetplattenantrieb
Unité disque magnétique

(30) Priority: 30.04.1991 JP 98506/91; 30.04.1991 JP 98509/91
(43) Date of publication of application: 19.03.1997
(62) Divisional of application: 92303907.7
(73) Proprietor: FUJITSU LIMITED, Kawasaki-shi, Kanagawa 211-8588 (JP)
(72) Inventor: Narita, Teruyuki, Nakahara-ku, Kawasaki-shi, Kanagawa 211 (JP); Tsunekawa, Masao, Nakahara-ku, Kawasaki-shi, Kanagawa 211 (JP); Tanaka, Hideaki, Nakahara-ku, Kawasaki-shi, Kanagawa 211 (JP); Sato, Atsushi, Higashine-shi, Yamagata 999-37 (JP)
(74) Representative: Hitching, Peter Matthew

(56) References cited:
- EP-A- 0 063 935
- EP-A- 0 173 844
- EP-A- 0 285 452
- US-A- 4 766 508
- US-A- 4 833 551
- PATENT ABSTRACTS OF JAPAN vol. 10, no. 80 (P-441), 29 March 1986 & JP-A-60 217572 (MITSUBISHI), 31 October 1985,
- PATENT ABSTRACTS OF JAPAN vol. 13, no. 91 (P-837), 3 March 1989 & JP-A-63 273284 (TOSHIBA), 10 November 1988,

## Description

The present invention relates to magnetic disk drive units, and in particular to magnetic disk drive units in which the position of a head is controlled according to servo information recorded on a servo disk.

To increase the storage capacity of a magnetic disk unit it is possible to increase the number of disk media arranged on a disk element, the number of heads, and/or a track density.

When the storage media and track density are increased, a data head that is controlled to be on track on a data surface according to servo information recorded on a servo surface can easily miss its intended track if the operating environment of the unit changes, in particular, if ambient temperature changes from low to high, or from high to low. If the data head misses its track in this way, no data can of course be read.

To prevent such data head "off-track" due to an ambient temperature change, an offset (an off-track quantity) of the data head with respect to an on-track position can be measured at regular intervals by reading servo information recorded on a disk surface.

When accessing a track for reading or writing data, an offset correction operation is carried out to displace a selected data head to eliminate such an offset.

Even if a positional deviation occurs between a servo surface and a data surface due to a change in ambient temperature, the above technique can control the data head with sufficient precision that the head attains its intended on-track position.

A sensitivity of reading signals on the servo information on the data surface is dependent on head clearance and amplifier characteristics, so that a proportional coefficient based on a fixed sensitivity may be insufficient to correctly detect an off-track state.

The offset to be used for the offset correction is measured during an interrupt that is carried out according to a time schedule set in dependence, for example, upon changes in ambient temperature. During the measurement of the offset, an access command such as a write or read command from a host unit must be queued until the measurement process is completed. This disadvantage should preferably be overcome.

The above matters will now be discussed in more detail.

In a magnetic disk unit, a rotary shaft of a spindle motor may carry, for example, four magnetic disks, which are rotated at a constant speed.

Among the magnetic disks both faces of the upper three disks and an upper face of the bottom disk have data surfaces, and a lower face of the bottom disk has a servo surface.

Data heads are disposed on the data surfaces of the magnetic disks, and a servo head is disposed on the servo surface.

The data heads and servo head are driven together by a voice coil motor (hereinafter referred to as the VCM), to cross tracks on the magnetic disks.

The servo surface on which the servo head is disposed has servo information recorded at every cylinder position. Signals read by the servo head provide positional signals indicating the track where the servo head is located.

The data surfaces on which the data heads are disposed have servo information, which is recorded on tracks of a specific cylinder or in a vacant space of a sector of every cylinder, and used to detect offsets of the data heads.

The servo head and data head 2 are ideally on a cylinder center, so that no offset correction is needed. Due to a difference in expansion coefficients of metals used for a head actuator, the center of the data head usually deviates from the cylinder center where the servo head is located.

The offset of the data head may involve:
(1) a thermal offset caused by a difference in expansion coefficients of the head actuator by ambient temperature;
(2) an external force offset caused by an external force applied on the head actuator; and
(3) an offset caused by magnetic forces of magnets that change depending on the rotational position of the VCM.

An offset of the data head is measured during operation of the magnetic disk unit, and stored in a memory. When positioning the head, the measured offset is removed by displacing the head, thereby correctly positioning the data head on the cylinder center.

The thermal offset of the above (1) may be measured for each data head, and the offset of one of the selected data heads may be corrected.

The external force offset of the above (2) must be measured for a specific head on all cylinders in principle. This, however, is troublesome, so that offsets of the head are measured for a predetermined number of cylinders, and the measured offset of a target cylinder is removed during a seek operation by supplying a predetermined current to the VCM to control speed.

The seek operation for removing the external force offset is disclosed in, for example, Japanese Unexamined Patent Publication (Kokai) No. 62-149082.

The servo information recorded on a data surface of a conventional magnetic disk unit is as follows. That is, a first item A of servo information for a certain frequency signal, for example, a maximum write frequency signal is recorded on an optional track on the data surface at a position X µm outward from the ontrack position of a data head, and a second item B of servo information at a position X µm inward from the ontrack position.

The servo information may be recorded on a specific track on a data surface, or in a vacant space of every sector on a data surface.

When the data head is ontrack, the head evenly reads the servo information items A and B to provide identical signals V_{A} and V_{B}

When the data head is Y µm offtrack outwardly, the head reads the servo information item A more than the servo information item B, to provide a large signal V_{A} and a small signal V_{B}.

When the data head is Y µm offtrack inwardly, the head reads the servo information item B more than the servo information item A, to provide a large signal V_{B} and a small signal V_{A}.

A servo control processor reads a differential signal (V_{A} - V_{B}) of the signals V_{A} and V_{B} read by the data head and determines an offset.

A relationship between the offset and the differential signal (V_{A} - V_{B}) can be represented with a certain proportional coefficient as indicated with a continuous line.

In a previously-considered offset detection process, a microprocessor for controlling a seek operation and an ontrack operation is entirely used (occupied) for measuring an offset of a data head during the offset detection process, so that, if a host unit issues at this time a write or read command involving a seek operation, the host-unit command (write or read command) will not be executed during the offset detection process. Only after the process is completed is the host-unit command executable. This may cause a delay in the host-unit command, and thus performance of the unit deteriorates.

Namely, once the offset detection process is started, a specific cylinder is sought, and a thermal offset of each data head is detected according to servo information recorded on data surfaces.

For measuring an external force offset, in principle all the cylinders on a specific data surface should be sought, to detect an offset for each cylinder.

Accordingly, the offset detection process may take about several hundreds of microseconds, i.e., several hundred times the time required for processing a host-unit command. In addition, the microprocessor for drive control is exclusively used for seek operations of the offset detection process. This may cause a delay in executing the host-unit command, thus degrading performance of the unit.

In particular, the offset detection process is carried out at very short intervals of, for example, one minute just after a power source is turned ON where ambient temperature widely changes. In this case, host-unit commands are frequently queued resulting in deterioration of throughput.

Further discussion of the above matters can be found in Japanese Unexamined Patent Publication (Kokai) No. 62-266781, which discloses a magnetic disk drive unit which may be considered to include: magnetic disks having respective data storage surfaces arranged coaxially with one another at intervals along a common rotary support shaft, one of the said data storage surfaces being used as a servo surface storing first predetermined servo information and the other data storage surfaces being read/write surfaces used for storing data applied to the unit, a plurality of those read/write surfaces being used also for storing second predetermined servo information; a servo head arranged in opposition to the said servo surface, and moveable thereover, for reading therefrom the said first predetermined servo information; read/write heads arranged respectively in opposition to the said read/write surfaces for reading data from those surfaces or writing data thereon, which heads together with the said servo head are carried by a common support structure controllable to move the heads between different data tracks on the respective opposed read/write surfaces when the unit is in use; control means for controlling operation of the unit; head offset detecting circuitry connected with the said servo head and with the said read/write heads and operable, in response to a predetermined control signal applied to the circuitry, to initiate an offset detection process in which signals derived from the said first and second predetermined servo information are processed to produce, for each in turn of the said read/write heads arranged in opposition respectively to the surfaces of the said plurality, a measure of the distance by which the read/write head concerned is offset from the said servo head.

A magnetic disk drive unit embodying the present invention is characterised by interrupt means operable if, during the course of the said offset detection process, the said control means receives a command calling for a preselected operation, of a type different from the said offset detection process, to cause execution of that process to be suspended upon production of the said measure for the head being dealt with when the said command is received, whereafter the said preselected operation is executed, and to cause the said offset detection process to be resumed after completion of execution of that operation.

In such a magnetic disk unit, host-unit commands can be processed as quickly as possible, even if the offset detection process is being carried out.

According to a second aspect of the present invention there is provided an offset detecting method, for use in a magnetic disk drive unit including magnetic disks having respective data storage surfaces arranged coaxially with one another at intervals along a common rotary support shaft, one of the said data storage surfaces being used as a servo surface storing first predetermined servo information and the other data storage surfaces being read/write surfaces used for storing data applied to the unit, a plurality of those read/write surfaces being used also for storing second predetermined servo information; a servo head arranged in opposition to the said servo surface, and movable thereover, for reading therefrom the said first predetermined servo information; and read/write heads arranged respectively in opposition to the said read/write surfaces for reading data from those surfaces or writing data thereon, which heads together with the said servo head are carried by a common support structure controllable to move the heads between different data tracks on the respective opposed read/write surfaces when the unit is in use; in which method signals derived from the said first and second predetermined servo information are processed to produce, for each in turn of the said read/write heads arranged in opposition respectively to the surfaces of the said plurality, a measure of the distance by which the read/write head concerned is offset from the said servo head; characterised in that if, during the course of the offset detection method, the unit receives a command calling for a preselected operation, of a type different from the said offset detection method, execution of the method is caused to be suspended upon production of the said measure for the head being dealt with when the said command is received, whereafter the said preselected operation is executed, the offset detection method being resumed after completion of execution of that operation.

Reference will now be made, by way of example, to the accompanying drawings, in which:
Fig. 1 is a schematic diagram showing parts of a magnetic disk unit;
Fig. 2A, Fig. 2B and Fig. 2C are schematic diagrams illustrating an offset detection method and an offset correction method;
Fig. 3 is a schematic diagram illustrating the form in which servo information can be stored on a data surface;
Fig. 4 is a schematic diagram illustrating an example of a method of recording such servo information on a data surface;
Fig. 5 is a schematic diagram illustrating another method of recording such servo information on a data surface;
Fig. 6A, Fig. 6B and Fig. 6C are schematic diagrams illustrating servo information and read signals, based thereupon, detected when a data head is off-track;
Fig. 7 is a graph illustrating the relationship between differential signals derived from such servo information and offset values;
Fig. 8 is a schematic diagram illustrating information recorded, together with an AGC region, on a data surface;
Fig. 9 is an explanatory diagram showing signals derived from servo information on a data surface when such an AGC region is provided;
Fig. 10 is a schematic diagram showing parts of a magnetic disk unit embodying the first aspect of the invention;
Fig. 11 is a block diagram of a magnetic disk unit embodying the present invention;
Fig. 12A is a schematic diagram for use in explaining one technique for measuring head offsets suitable for use in a magnetic disk unit embodying the present invention;
Fig. 12B is a graph corresponding to Fig. 7 for illustrating determination of a proportional constant by the Fig. 12A technique;
Fig. 13, comprising Fig. 13A and Fig. 13B, is a block diagram of a disk drive unit included in the magnetic disk unit of Fig. 11;
Fig. 14 is a flowchart relating to an offset detection process carried out by an offset detector included in the disk drive unit of Fig. 13;
Fig. 15 is a table illustrating the manner in which proportional constants obtained by the Fig. 14 offset detection process can be stored;
Fig. 16 is a table illustrating the manner in which offsets, based on proportional constants obtained by the Fig. 14 offset detection process, can be stored;
Fig. 17 is a block diagram showing parts of a conversion circuit included in the Fig. 13 disk drive unit;
Fig. 18 is a waveform diagram showing operating waveforms in the conversion circuit of Fig. 17;
Fig. 19, comprising Fig. 19A and Fig. 19B, is a chart illustrating an offset detection process embodying the second aspect of the invention;
Fig. 20, comprising Fig. 20A and Fig. 20B, is a is a chart corresponding to Fig. 19 but relating to another offset detection process embodying the second aspect of the invention;
Fig. 21 is a sectional plan view of a disk enclosure included in a magnetic disk unit embodying the invention; and
Fig. 22 is a sectional side view corresponding to Fig. 21.

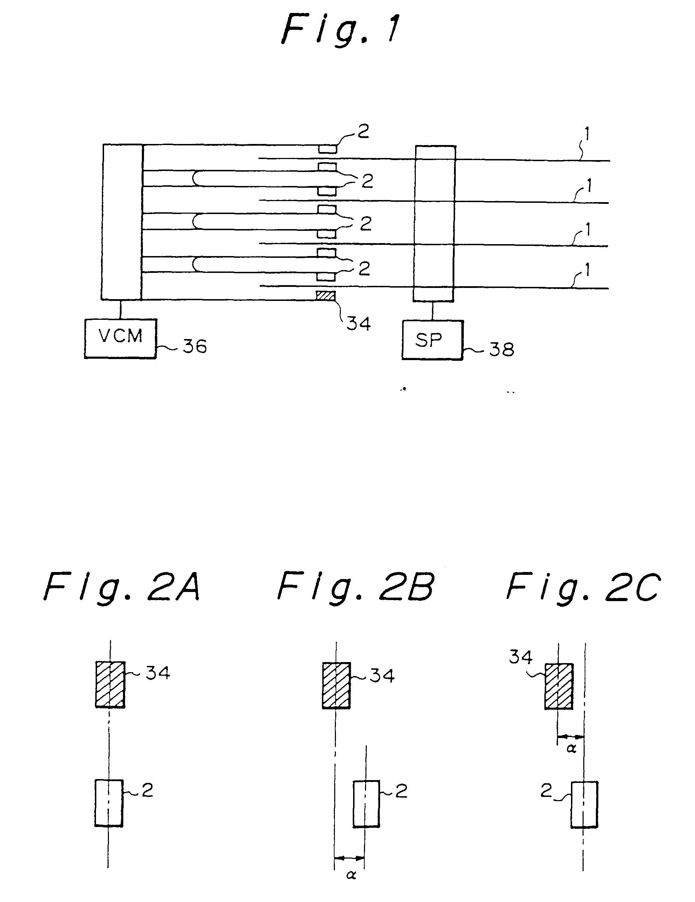

Figure 1 schematically shows a magnetic disk unit. A rotary shaft of a spindle motor 38 carries, for example, four magnetic disks 1, which are rotated at a constant speed.

Among the magnetic disks 1, both faces of the upper three disks and an upper face of the bottom disk have data surfaces, and a lower face of the bottom disk has a servo surface.

Data heads 2 are disposed on the data surfaces of the magnetic disks 1, and a servo head 34 is disposed on the servo surface.

The data heads 2 and servo head 34 are driven together by a voice coil motor to cross tracks on the magnetic disks 1.

The servo surface on which the servo head 34 is disposed has servo information recorded at every cylinder position. Signals read by the servo head 34 provide positional signals indicating the track where the servo head 34 is located.

The data surfaces on which the data heads 2 are disposed have servo information, which is recorded on tracks of a specific cylinder or in a vacant space of a sector of every cylinder, and used to detect offsets of the data heads 2.

Figures 2A, 2B, and 2C are explanatory views showing a detection of an offset of a data head.

In Fig. 2A, the servo head 34 and data head 2 are on a cylinder center (dot-and-dash line), so that no offset correction is needed. In practice, however, because of a difference in expansion coefficients of metals used for a head actuator, the center of the data head 2 usually deviates from the cylinder center where the servo head 34 is located, as shown in Fig. 2B.

The causes of the offset of the data head 2 were discussed in the introduction to the present specification.

An offset α of the data head 2 shown in Fig. 2B is measured during an operation of the magnetic disk unit, and stored in a memory. When positioning the head, the measured offset α is removed by displacing the head, thereby correctly positioning the data head 2 on the cylinder center.

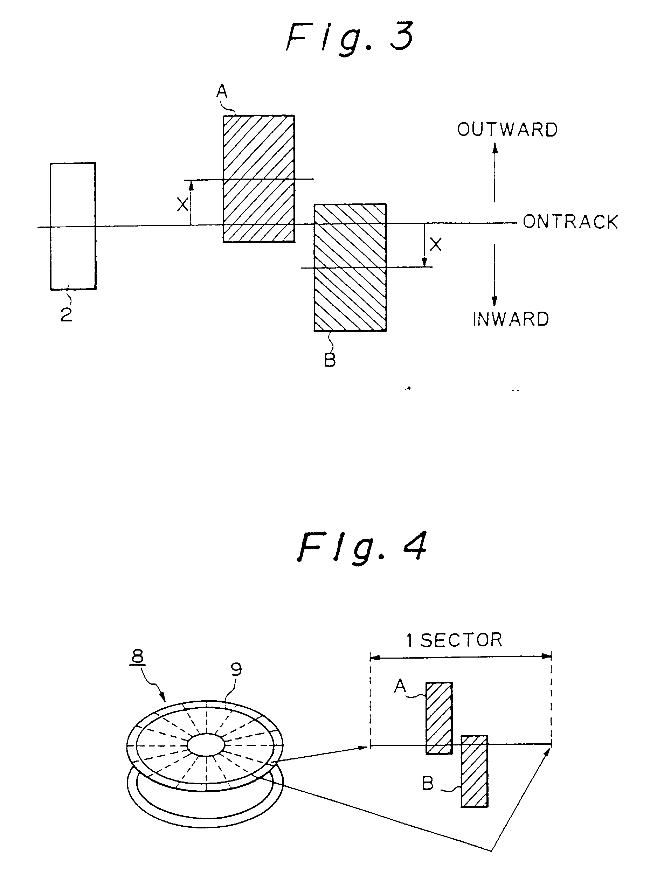

Figure 3 shows servo information recorded on a data surface of a magnetic disk unit.

In Fig. 3, a first item of servo information A for a certain frequency signal, for example, a maximum write frequency signal is recorded on an optional track on the data surface at a position X µm outward from the ontrack position of a data head 2, and a second item B of servo information at a position X µm inward from the ontrack position.

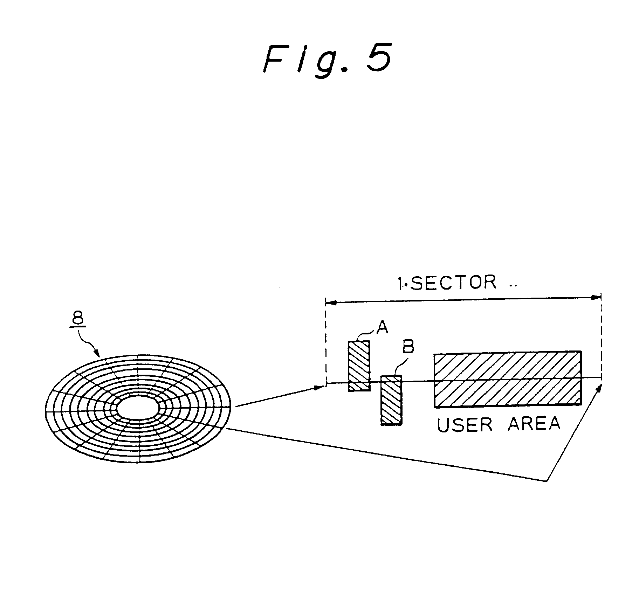

The servo information may be recorded on a specific track 9 on a data surface 8 as shown in Fig. 4, or in a vacant space of every sector on a data surface 8 as shown in Fig. 5.

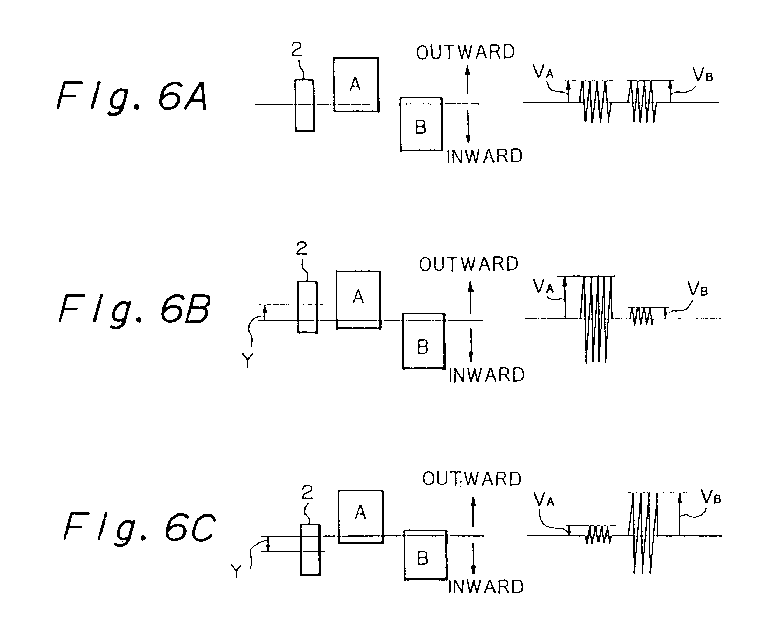

When the data head 2 is ontrack, the head evenly reads the servo information items A and B as shown in Fig. 6A, to provide identical signals V_{A} and V_{B}.

When the data head 2 is Y µm offtrack outwardly as shown in Fig. 6B, the head reads the servo information item A more than the servo information item B, to provide a large signal V_{A} and a small signal V_{B}.

When the data head 2 is Y µm offtrack inwardly as shown in Fig. 6C, the head reads the servo information item B more than the servo information item A, to provide a large signal V_{B} and a small signal V_{A}.

A servo control processor reads a differential signal (V_{A} - V_{B}) of the signals V_{A} and V_{B} read by the data head 2 and determines an offset.

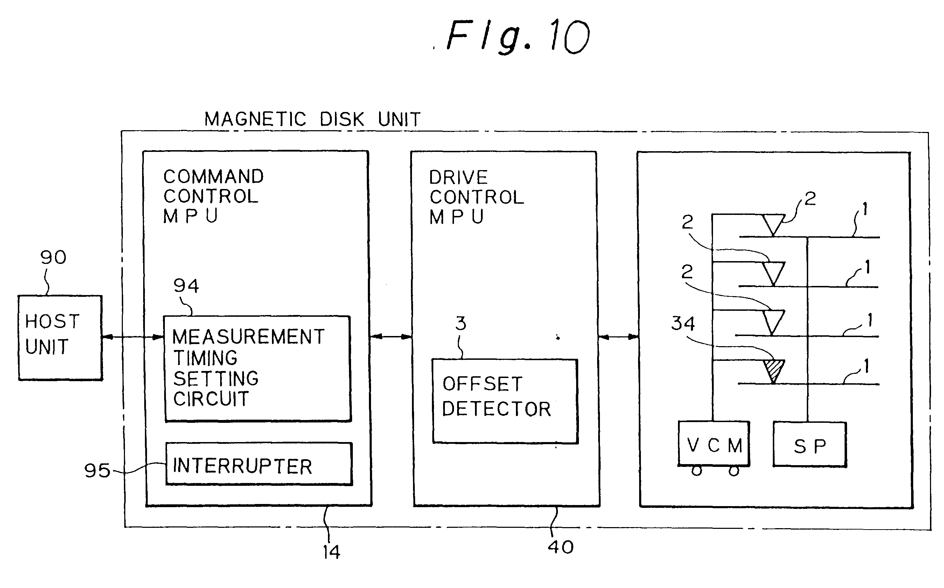

The magnetic disk unit of Fig. 10 has a command control microprocessor unit (MPU) 14 for decoding a command provided by a host unit 90 and generating an internal command, and a drive control MPU 40 for carrying out head positioning control on disk media 1 according to the internal command provided by the command control MPU 14.

The Fig. 10 magnetic disk unit comprises an offset detector 3 (head offset detecting circuitry) for detecting offsets of data heads 2 relative to a servo head 34 according to servo information read by the data heads 2 on data surfaces of the disk media 1; a measurement timing setting circuit 94 for instructing the offset detector 3 to start an offset detection process according to a predetermined time schedule; and an interrupter 95 which serves, if the command control MPU 14 decodes a read or write command provided by the host unit 90, to interrupt the offset detection process, to execute the host-unit read or write command first, and to resume the offset detection process after the host-unit command is completed.

The offset detector 3 carries out the offset detection process on the data heads 2 in predetermined order, and when receiving an interrupt instruction from the interrupter 95, interrupts the process after detecting an offset of the data head presently being measured.

The offset detector 3 obtains a differential signal (V_{A} - V_{B}) of signals read by a data head 2 from first and second servo information items A and B that are offset in different directions by a predetermined quantity from a track center on the data surface to which the data head concerned is opposed, multiplies the differential signal (V_{A} - V_{B}) by a given proportional coefficient K, and hence detects an offset of the data head concerned.

The measurement timing setting circuit 94 provides measurement timing at intervals depending on changes in ambient temperature just after a power source of the unit is turned ON.

The interrupter 95 resumes the interrupted offset detection process, provided that the host unit 90 does not issue a command for a predetermined continuous time.

The head offset detecting circuitry carries out the offset measurement (offset detection process) in the magnetic disk unit according to a predetermined time schedule. If the host unit provides a write or read command during the offset measurement, the system interrupts the offset measurement, positions a head through a seek operation according to the host-unit command, and executes the write or read command, thereby according priority to that command.

Accordingly, the circuitry of Fig. 10 minimizes a wait time of execution of the host-unit command due to the offset measurement, to thereby improve the throughput and performance of the unit without degrading the offset measuring function.

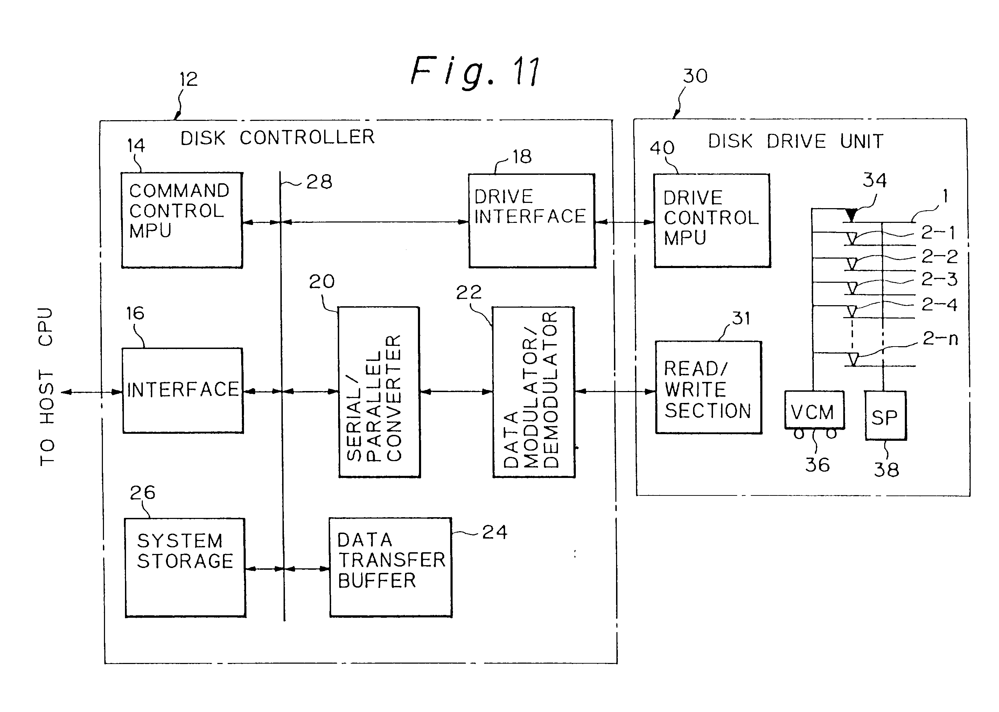

Figure 11 is a general schematic view showing a magnetic disk unit embodying the present invention.

In Fig. 11, the magnetic disk unit generally comprises a disk controller 12 and a disk drive unit 30.

The disk controller 12 incorporates the above-mentioned command control MPU 14 for carrying out centralized control.

In this embodiment, the command control microprocessor 14 is employed to perform the function of the measurement timing setting circuit 94 shown in the schematic view of Fig. 10, i.e. providing an instruction to start offset detection according to a predetermined time schedule, and the function of the interrupter 95, i.e. interrupting the offset detection if a read or write command from a host unit is decoded during the offset detection, executing the command first, and resuming the offset detection after the completion of the command.

The function of the measurement timing setting circuit 94 may alternatively be realized in the disk drive unit 30.

The command control MPU 14 is connected, through an internal bus 28, to a higher interface 16, a drive interface 18 to the disk drive unit 30, a serial/parallel converter 20, a data transfer buffer 24, and a system storage 26.

The drive interface 18 transfers control commands from the command control MPU 14 to the disk drive unit 30.

The serial/parallel converter 20 transfers write or read data to and from the disk drive unit 30 through a data modulator/demodulator 22.

The serial/parallel converter 20 and data modulator/demodulator 22 usually form a VFO (variable frequency oscillator) section.

Write or read data is initially stored in the data transfer buffer 24 and then transferred to the disk drive unit 30 or a host CPU.

The disk drive unit 30 has the above-mentioned drive control MPU 40 and a READ/WRITE section 31. A spindle motor (SP) 38 rotates a plurality of magnetic disks 1 serving as storage media at a constant speed. Heads are arranged for the magnetic disks 1 and moved across tracks of the disks 1 by a voice coil motor (VCM) 36.

A top one of the heads is a servo head 34, and the remaining ones are data heads (read/write heads) 2 which are denoted 2-1 to 2-n in more detail.

The servo head 34 reads a servo disk among the magnetic disks 1. Servo information (first predetermined servo information) is recorded at all cylinder positions (all tracks) on a servo surface of the servo disk.

The data heads 2-1 to 2-n write or read data disks among the magnetic disks 1. Servo information (second predetermined servo information) is recorded sector by sector on each data surface (read/write surface). Namely, as shown in Fig. 3, a first item A of servo information for a certain frequency signal, for example a maximum write frequency signal, is recorded at a position X µm outwardly shifted from an ontrack position (intended tracking line) of the data head 2 on a specific track on a data surface of a magnetic disk, and a second item B of servo information is recorded at a position X µm inwardly shifted from the ontrack position.

As shown in Fig. 4, the servo information may be recorded on a specific track 9 on a data surface 8, or, as shown in Fig. 5, in a vacant space of every sector on a data surface 8.

When the data head 2 is truly ontrack (on its intended tracking line), the head evenly reads the servo information items A and B as shown in Fig. 6A, to provide identical signals V_{A} and V_{B}.

When the data head 2 is outwardly offtrack as shown in Fig. 6B, the head reads the servo information item A more than the servo information item B, to provide a large signal V_{A} and a small signal V_{B}.

When the data head 2 is inwardly offtrack as shown in Fig. 6C, the head reads the servo information item B more than the servo information item A, to provide a large signal V_{B} and a small signal V_{A}.

The drive control microprocessor 40 disposed in the disk drive unit 30 reads a differential signal (V_{A} - V_{B}) of signals V_{A} and V_{B} read by the data head 2 during the offset measurement, and detects an offset.

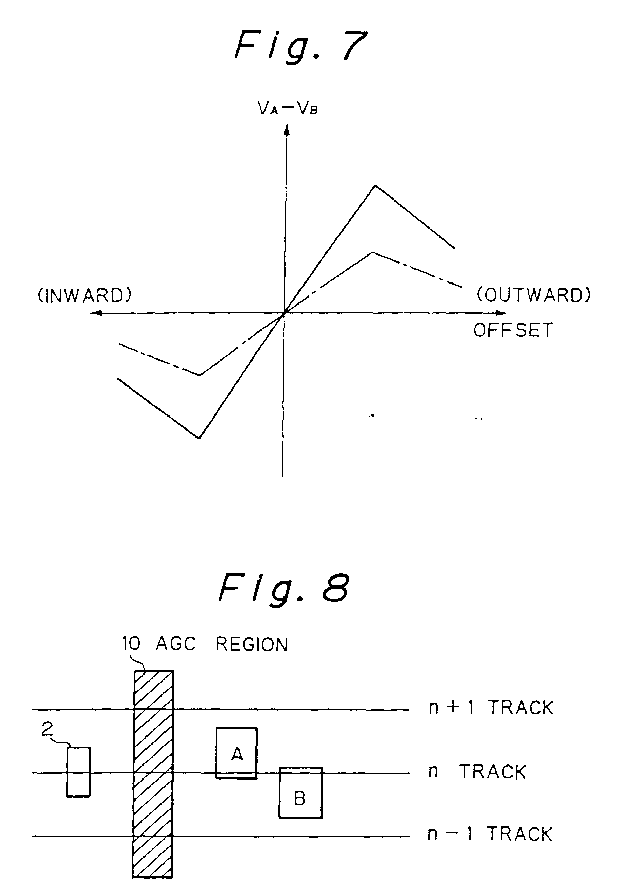

In this case, a relationship between the offset and the differential signal (V_{A} - V_{B}) can be represented by a constant proportional coefficient (inclination) K as shown in Fig. 7 (continuous line).

Accordingly, an offset α can be calculated by multiplying a differential signal (V_{A} - V_{B}) of signals read on the servo information items A and B on a data surface by the proportional coefficient K.

Namely, an offset α for the servo information on a data surface is calculated as follows:${\text{α = K . (V}}_{\text{A}} {\text{- V}}_{\text{B}} \text{)}$

As noted above, the relationship between the offset and the differential signal (V_{A} - V_{B}) can be represented by a certain proportional coefficient as indicated with a continuous line in Fig. 7.

However, an output of the data head 2 changes depending on a floating quantity of the head (spacing between the head and the data surface), a fluctuation in a head core width, and a circumferential speed. Accordingly, the relationship between the offset and the differential signal (V_{A} - V_{B}) based on the servo information is not strictly expressible with a constant proportional coefficient but differs from data head to data head. For example, some data heads exhibit poor sensitivity, i.e. a low proportional coefficient, as indicated with a dot-and-dash line in Fig. 7.

A technique that applies a constant proportional coefficient to the output characteristics of every data head, therefore, may not always be capable of correcting the head offset with sufficient accuracy.

To attempt to overcome this problem it would be possible to provide an AGC region 10 disposed in front of the servo information items A and B, as shown in Fig. 8.

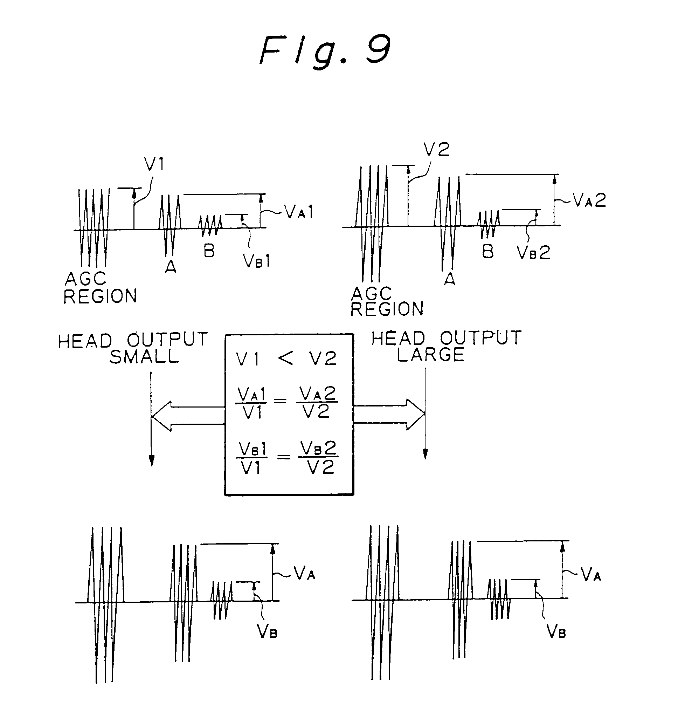

As shown in Fig. 9, an amplifier gain for providing a constant head output is determined on the basis of signals read from the AGC region 10. With this amplifier gain, signals read at the servo information regions A and B are amplified, so that a differential signal (V_{A} - V_{B}) of the read signals may be constant for the same offset even if the output of the head changes.

Even with this AGC region 10, a relationship between an offset and a differential signal (V_{A} - V_{B}) read on the servo information items A and B does not always follow the proportional constant but fluctuates depending on fluctuations in the amplifier gain and head writing and reading divergences. Thus, the problem of inaccurate offset correction remains.

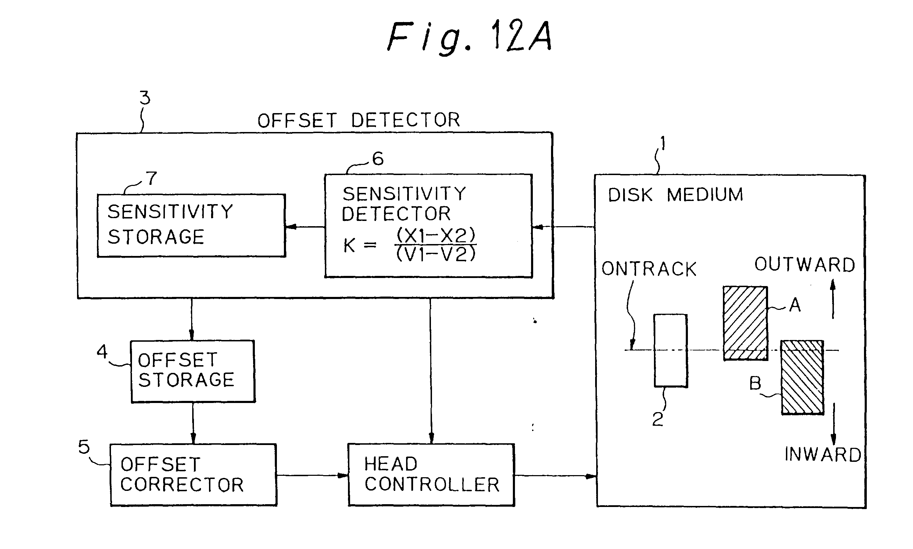

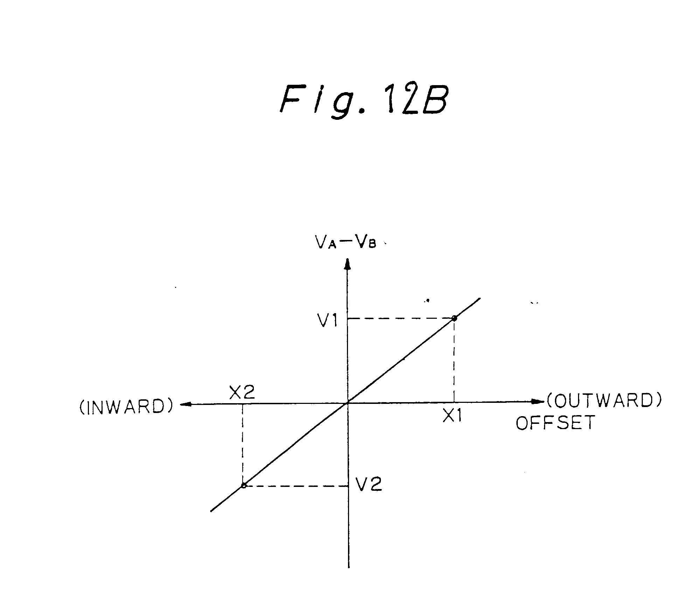

One solution to this problem will now be explained with reference to Figures 12A and 12B. As described previously, the magnetic disk unit has disk media l each having a first item A of servo information recorded thereon with an outward offset of a predetermined quantity from an ontrack position and a second item B of servo information with an inward offset of a predetermined quantity from the ontrack position; and the offset detector 3 reads signals V_{A} and V_{B} based on the first and second items A and B of servo information on one disk medium 1 with a data head 2, detects an offset of the data head by multiplying a differential signal (V_{A} - V_{B}) of the read signals by a proportional coefficient K representing an output sensitivity of the data head, and stores the offset of each data head in an offset storage 4. After detection of the offset for the head concerned, an offset corrector 5 corrects the position of that data head 2 when selected for reading or writing its opposed disk medium l in such a way as to remove the offset of the selected data head 2 stored in the offset storage 4.

In order to cope with variations in the sensitivity of servo signal detection by each head from its associated data surface of such a magnetic disk unit, a sensitivity detector 6 is disposed in the offset detector 3, for outwardly offsetting a data head 2 from an ontrack position by a given quantity Xl, reading signals V_{A} and V_{B} on the first and second items A and B of servo information, and detecting a differential signal Vl of the read signals. The sensitivity detector 6 then inwardly offsets the data head 2 from the ontrack position by a given quantity X2, reads signals V_{A} and V_{B} on the first and second items A and B of servo information, detects a differential signal V2 of the read signals, and computes a proportional coefficient K for the data head according to the differential signals V1 and V2.

The sensitivity detector 6 computes the proportional coefficient K as follows:$\text{K = (X1 - X2) / (V1 - V2)}$ where X1 denotes the outward shift, X2 the inward shift, V1 the differential signal value of the signals read from the first and second items A and B of servo information when the head is at the first reading position (having the outward shift X1), and V2 the differential signal value of the signals read from the first and second items A and B of servo information when the head is at the second reading position (having the inward shift X2).

The sensitivity detector 6 stores the respective proportional coefficients K of the data heads in a sensitivity storage 7.

The sensitivity detector 6 detects a proportional coefficient K for one data head 2 at first, reads signals on the first and second items A and B of servo information with the data head 2 at the ontrack position, obtains a differential signal (V_{A} - V_{B}), computes an offset of the data head by multiplying the differential signal (V_{A} - V_{B}) by the proportional coefficient K, and stores the offset in the offset storage 4.

In the Fig. 12A circuit, a data head 2 whose offset is to be detected is controlled to an ontrack position according to servo information read out of a servo disk, and then the data head is moved for offset detection.

In particular, the Figure 12A sensitivity correcting circuit forcibly shifts a head position at least two times for every data head to obtain differential signals V1 and V2 of signals read on the servo information items A and B, and finds an offset of the data head by making use of a proportional coefficient (measure of sensitivity) obtained from actual outputs of the data head. Accordingly, it is possible to establish a proportional coefficient (sensitivity measure) specific to each data head even if the output of the data head fluctuates, and correctly detect an offset of the data head. Thereafter, the offset is corrected and the data head is accurately placed on a track for reading or writing the track even if there is a change in ambient temperature.

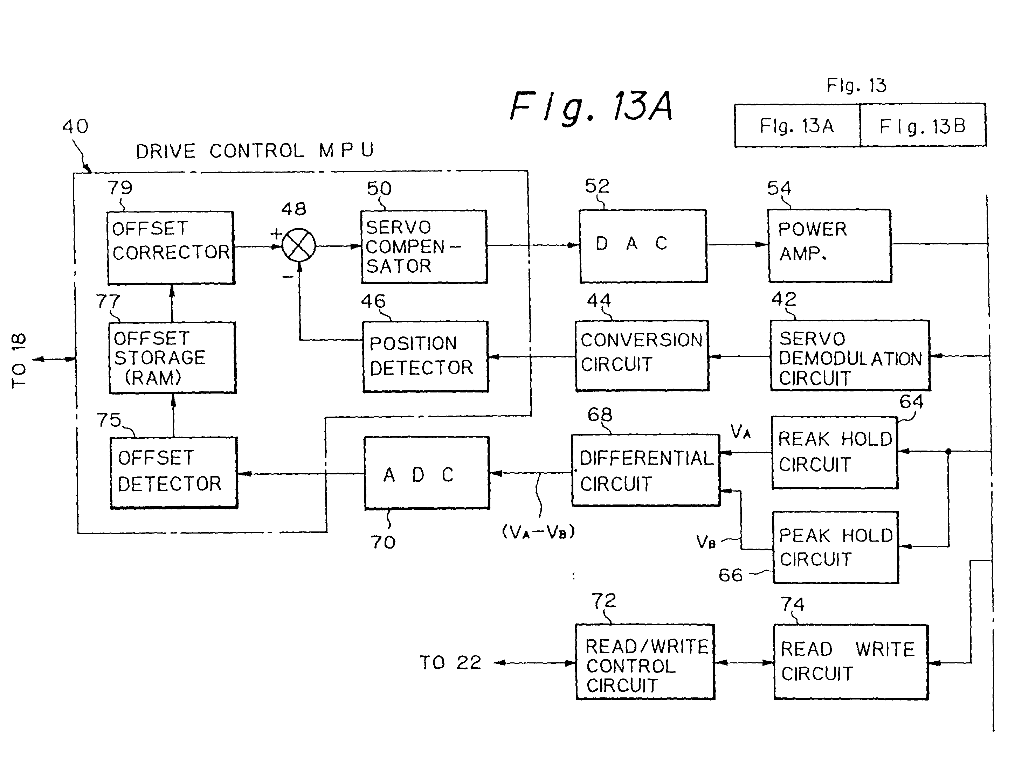

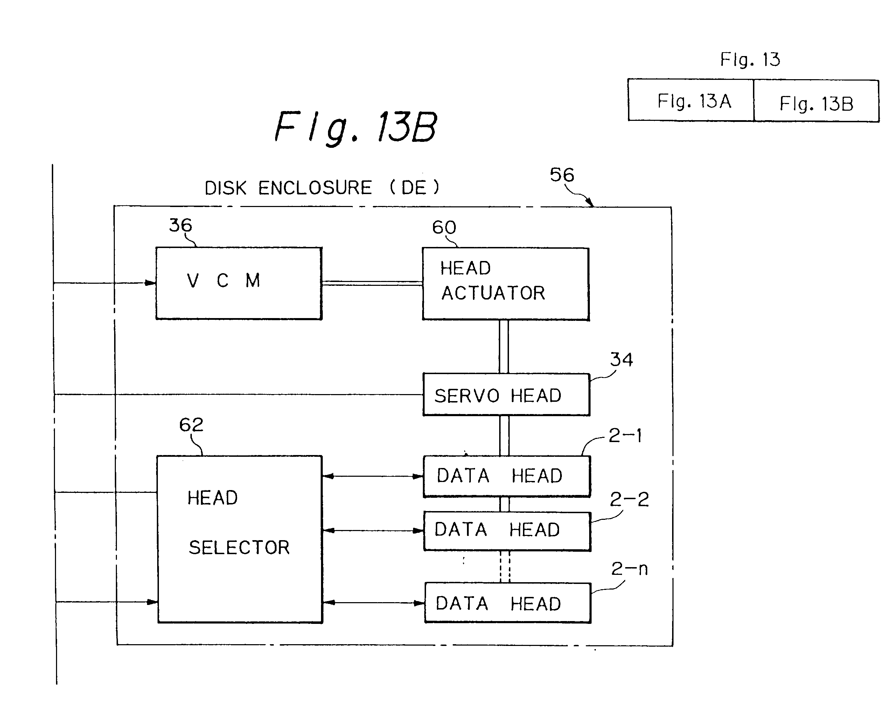

Figure 13, which comprises Fig. 13A and Fig. 13B, is a schematic view showing the disk drive unit 30 of the embodiment of Fig. 11.

In Fig. 13, the disk drive unit 30 has the microprocessor (MPU) 40 serving as a main control section.

A disk enclosure (DE) 56 has a head actuator 60 driven by the voice coil motor 36. The head actuator 60 is connected to the servo head 34 and data heads 2-1 to 2-n.

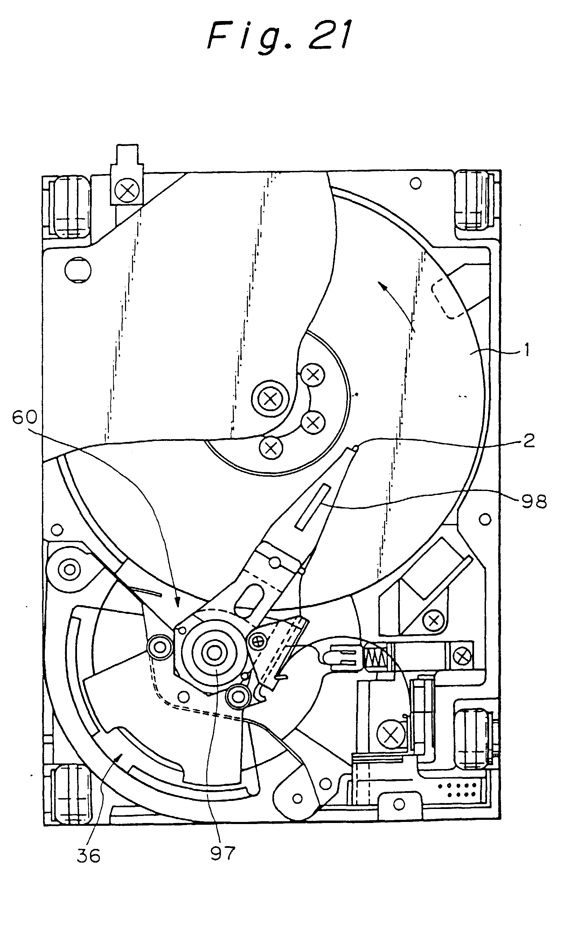

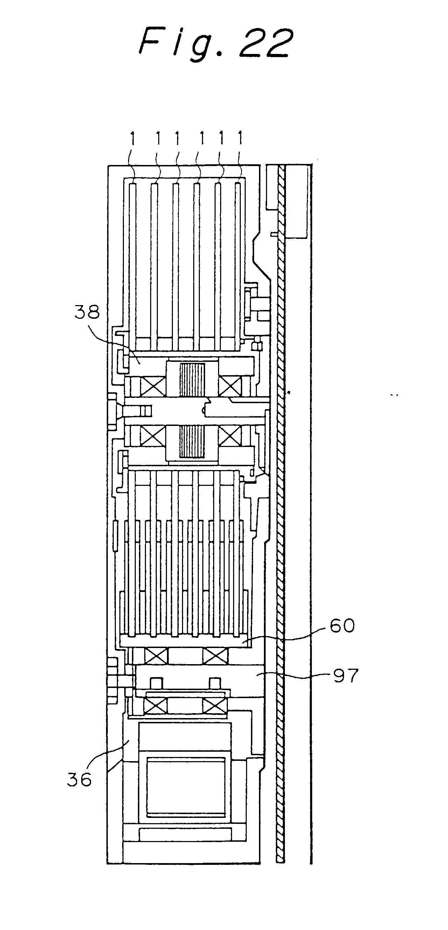

Figure 21 and Fig. 22 are respective sectional plan and side views of the disk enclosure fitted in the magnetic disk unit. In the figure, 97 is an axis and 98 is an arm.

A servo signal read by the servo head 34 is demodulated by a servo demodulation circuit 42 into two positional signals POSN and POSQ, which are applied to a conversion circuit 44.

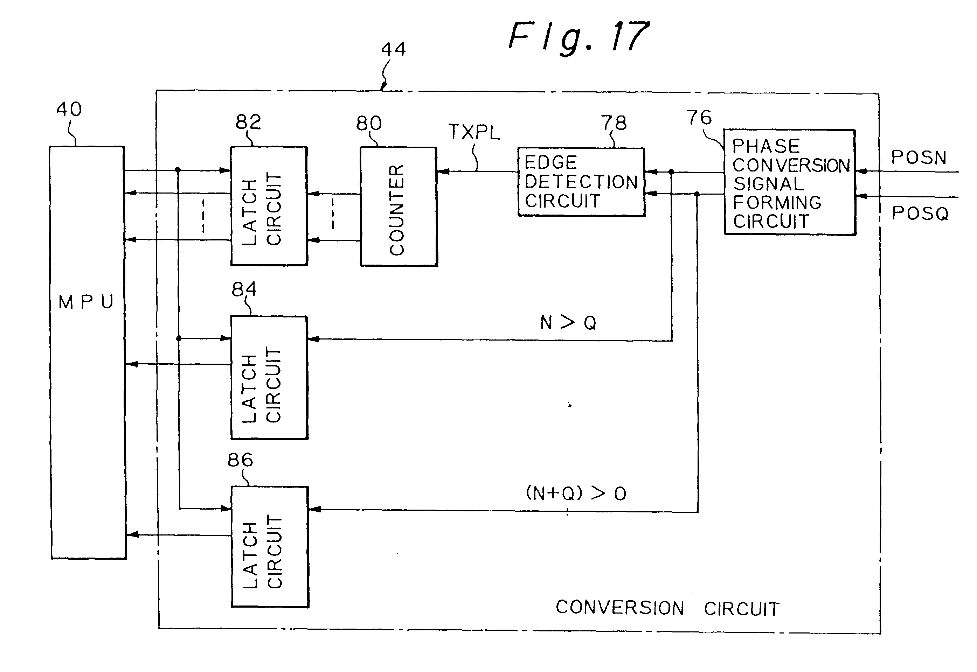

Figure 17 is a block diagram showing an example of the conversion circuit 44 of Fig. 13.

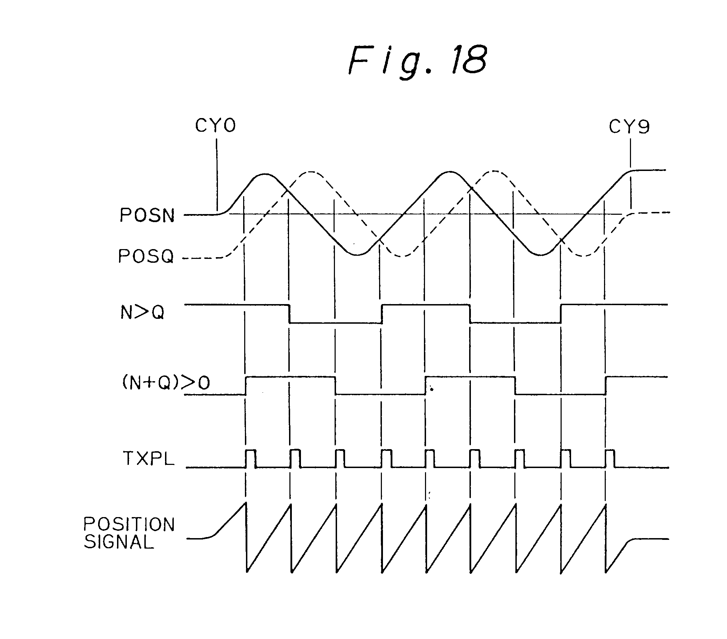

In Fig. 17, the conversion circuit 44 has a phase conversion signal forming circuit 76 for forming signals (N > Q) and {(N + Q) > 0} shown in Fig. 18 according to the positional signals POSN and POSQ provided by the servo demodulation circuit 42.

The two output signals from the phase conversion signal forming circuit 76 are provided to an edge detection circuit 78, which detects edges of the two signals to provide a track crossing pulse TXPL shown in Fig. 18.

The track crossing pulse TXPL from the edge detection circuit 78 is counted by a counter circuit 80 to find the number of tracks crossed by a corresponding head. In Figure 18, CY denotes a cylinder.

A signal from the counter 80 and the two output signals from the phase conversion signal forming circuit 76 are provided to latch circuits 82, 84, 86, respectively.

The latch circuits 82, 84 and 86 receive a common latch control signal from the microprocessor 40, and simultaneously latch the three signals. Thereafter, the microprocessor 40 sequentially reads the latched data.

In this way, the three latch circuits 82, 84, and 86 simultaneously latch the output signals of the counter circuit 80 and phase conversion signal forming circuit 76, and the microprocessor 40 sequentially reads the latched signals. When the microprocessor 40 alternately carries out head position control and higher command execution according to timed interrupts, the head position control may be interrupted because of the timeout required to execute a higher command. Thereafter, the head position control may be resumed. In this case, there is a time lag. Even with such a time lag, it is possible to correctly continue the head position control, with no adverse effects due to the time lag, using the simultaneously latched data.

The signals (latched data) from the conversion circuit 44 are read by a position detector 46 of the microprocessor 40, to generate positional data (positional signal) that linearly changes for each track as shown in Fig. 18.

It is naturally possible to detect a head speed according to a period of the track crossing pulse TXPL provided by the conversion circuit 44.

The microprocessor 40 has a servo processing section that is realized by program control and includes the position detector 46, an add point 48, and a servo compensator 50.

The position detector 46 carries out speed control for a seek operation and position control for an ontrack operation.

Namely, it moves a head to a target track through the seek operation by feedback control of a target speed and a head moving speed. Once the head reaches the target track through the seek operation, it switches the speed control to the position control to put the head on an ontrack position.

For ontrack control on the target track, which is carried out after a seek operation, the servo compensator 50 provides position control data for the voice coil motor 36 so that the positional signals (Fig. 18) from the position detector 46 may always indicate the center of the track. The servo compensator 50 has a function of increasing the high frequency gain of a servo signal to compensate for an advanced phase.

The position control data from the microprocessor 40 is converted by a DA converter 52 into an analog voltage whose power is amplified by a power amplifier 54 to drive the voice coil motor 36.

The microprocessor 40 has an offset detector 75, an offset storage 77, and an offset corrector 79.

The offset detector 75, which corresponds to the offset detector 3 in Fig. 11, carries out an offset detection process after a power source of the magnetic disk unit is turned ON, according to an interrupt carried out according to a predetermined time sequence.

For example, the offset detector 75 carries out an offset detection process whenever it receives an internal command to start a measurement from the command control microprocessor 14 of Fig. 11 after a power source of the magnetic disk unit is turned ON.

The offset detection process is carried out at short intervals of, for example, one minute just after the power source is turned ON with ambient temperature changing widely, ten minutes some time after that, and at long intervals of, for example, one hour after the temperature is stabilized and saturated.

The offset detector 75 receives a differential signal (V_{A} - V_{B}) based on signals read by one of the data heads 2-1 to 2-n.

The data heads 2-1 to 2-n are connected to a head selector 62, which provides, in response to a selection signal from the microprocessor 40 designating which head is to be used, signals read by the designated data head to peak hold circuits 64 and 66. The heads are designated sequentially in the offset detection process.

The peak hold circuit 64 holds, according to timing controlled by the microprocessor 40, a peak value V_{A} of a signal read on the first item A of servo information recorded on a data surface.

The peak hold circuit 66 holds, according to timing controlled by the microprocessor 40, a peak value V_{B} of a signal read on the second item B of servo information recorded on the data surface.

A differential circuit 68 provides a differential signal (V_{A} - V_{B}) of the output signals of the peak hold circuits 64 and 66. The differential signal (V_{A} - V_{B}) is converted by an AD converter 70 into digital data, which is read by the offset detector 75 of the drive control microprocessor 40.

The offset detector 75 uses the proportional coefficient K having the characteristics shown in Fig. 7, and calculates an offset α for each of the data heads 2-1 to 2-n, if it is a thermal offset. The offsets obtained are stored in the offset storage 77 that is a RAM.

If it is an external force offset, a specific data head, for example the data head 2-1, is selected, and an offset is detected on every predetermined number of cylinders. The offsets obtained are stored in the offset storage 77. It is naturally possible to detect offsets on all cylinders, calculate an average offset for every predetermined number of cylinders, and store the average offsets in the storage.

A data writing or reading operation with the data heads 2-1 to 2-n is carried out through a read/write control circuit 72 and a read/write circuit 74. At this time, the head selector 62 is controlled by the microprocessor 40 to let a specific data head read or write data.

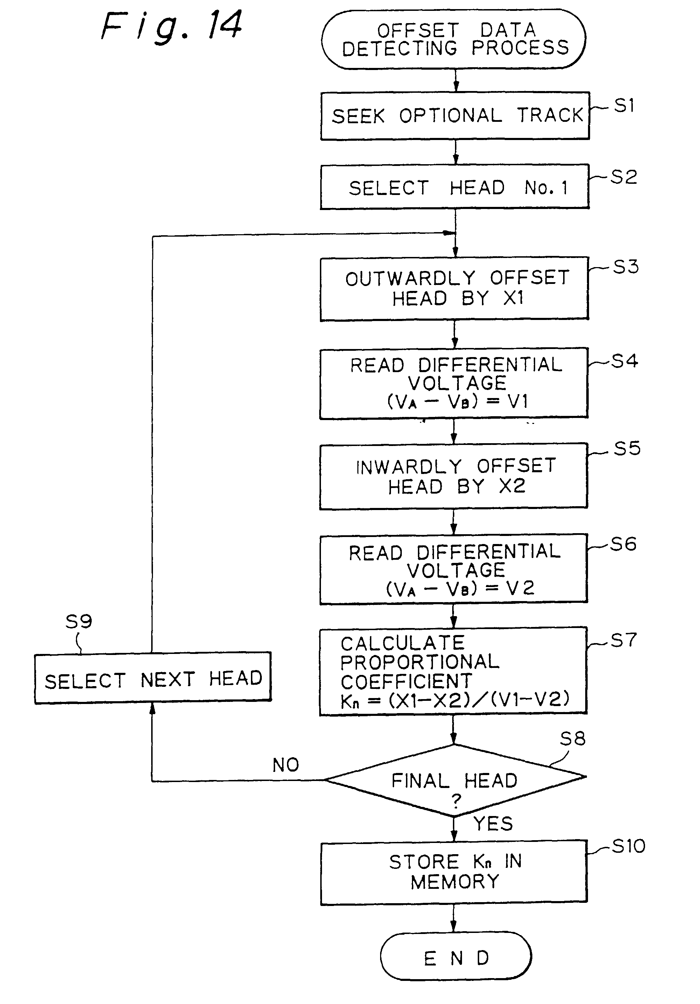

Figure 14 is a flowchart showing an offset detection process carried out by the offset detector 75 in Fig. 13.

The interrupt carried out according to the time schedule after the power source is turned ON starts the offset detection process of Fig. 14.

Step S1 causes a head to seek a predetermined track position (or cylinder position). When servo information is arranged on a data surface as shown in Fig. 4, the head moves to the specific track 9 on which the servo information is recorded. When the servo information is recorded in a vacant space of a sector as shown in Fig. 5, the head moves to an optional track position. After the head moves to the track position through the seek operation, the head is controlled to an ontrack position according to servo information provided by the servo head 34.

Step S2 selects the data head 2-1 as a No. 1 head.

In this embodiment, it is supposed that there are six magnetic disks 1. Both sides of each disk have a recording surface. Accordingly, there is one servo head 34 and there are 11 data heads 2-1 to 2-n. Namely there are 11 data heads, Nos. 1 to 11.

Step S3 forcibly shifts the data head outwardly from the ontrack position by a fixed quantity of X1 µm. Then, Step S4 reads a differential signal V1 = (V_{A} - V_{B}) of signals read on the servo information items A and B.

Step S5 forcibly shifts the data head inwardly from the ontrack position by a fixed quantity of X2 µm. Then, Step S6 reads a differential signal V2 = (V_{A} - V_{B}) of signals read on the servo information items A and B.

Step S7 computes a proportional coefficient K1 indicating an output sensitivity of the No. 1 head as follows:$\text{K1 = (X1 - X2) / (V1 - V2)}$ and temporarily stores the same in a system storage, etc.

Step S8 checks to see whether or not the head is the last one. If it is not the last head, Step S9 switches the head to the next one, and the process returns to Step S3. Steps S3 to S7 are repeated to detect proportional coefficients Kn.

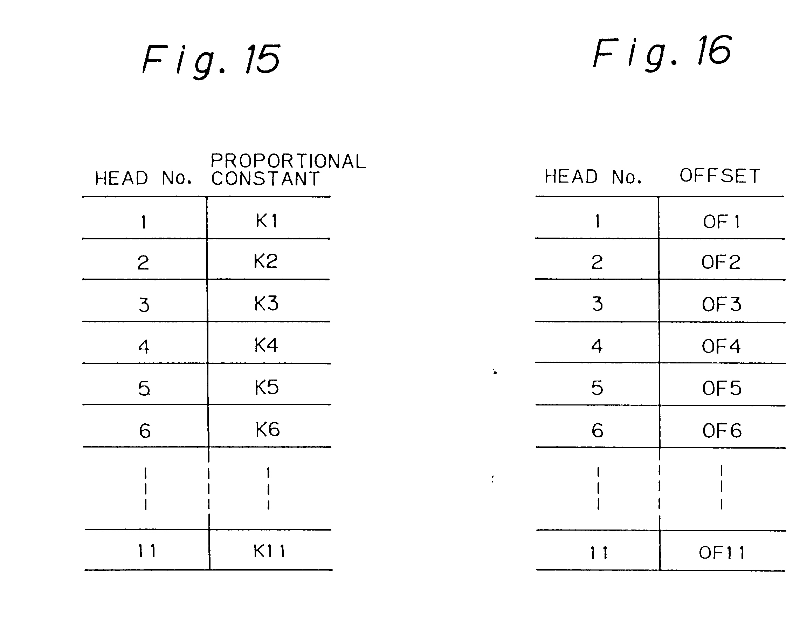

When Step S8 detects the last head, Step S10 stores the computed proportional coefficients K1 to K11 of the heads No. 1 to No. 11 in the offset storage 77, as shown in Fig. 15.

Thereafter, each of the data heads 2-1 to 2-11 provides, on the ontrack position, a differential signal (V_{A} - V_{B}) from signals read on the servo information. The differential signals are multiplied by the already detected proportional coefficients K1 to K11 shown in Fig. 15, respectively, to provide offsets (distance measures) OF1 through OF11. The offsets OF1 through OF11 of the respective heads are stored in the offset storage 77 as shown in Fig. 16.

Once the offsets of the respective heads are stored as shown in Fig. 16, it is not particularly necessary to preserve the proportional coefficients of the respective heads shown in Fig. 15.

Referring again to Fig. 13, the offset storage 77 stores the offsets shown in Fig. 16 that have been obtained from the proportional coefficients of Fig. 15. When one of the selected data heads performs a seek operation according to a write or read instruction from the higher disk controller 12, one of the offsets corresponding to the selected data head is read out of the offset storage 77, and a correction signal for moving the head in such a way as to remove the offset is provided from the offset corrector 79 to the add point 48, which adds the correction signal to positional data that is based on servo information provided by the servo head 34, thereby completing the offset correction.

Even if any data surface deviates from the servo surface due to a change in ambient temperature, a corresponding data head can be correctly controlled to an ontrack position after the completion of the seek operation.

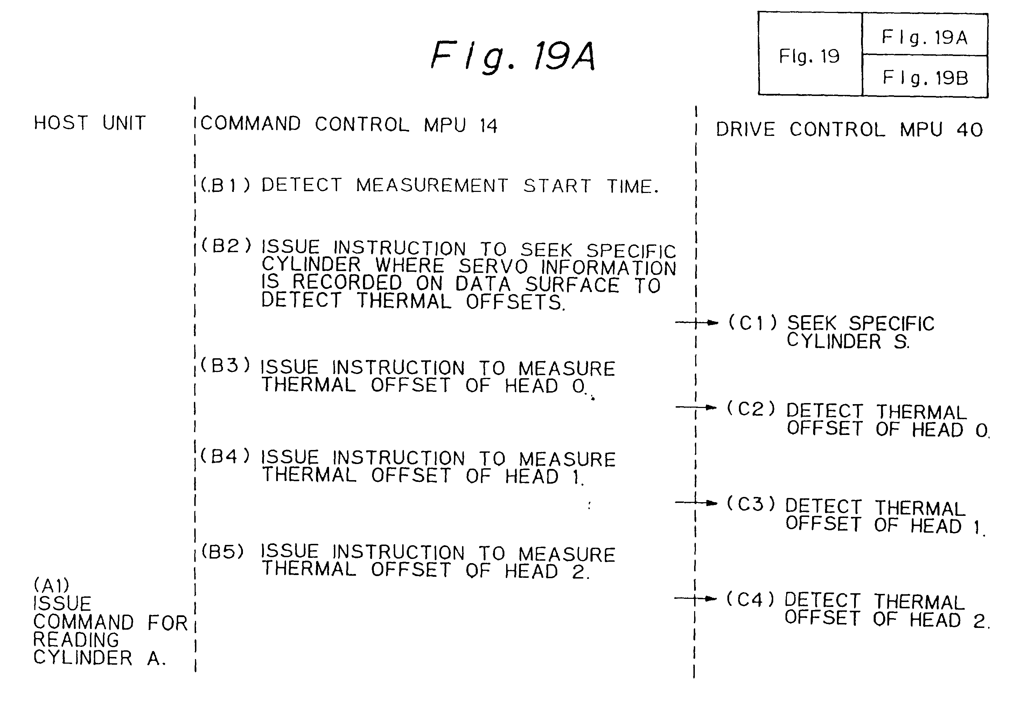

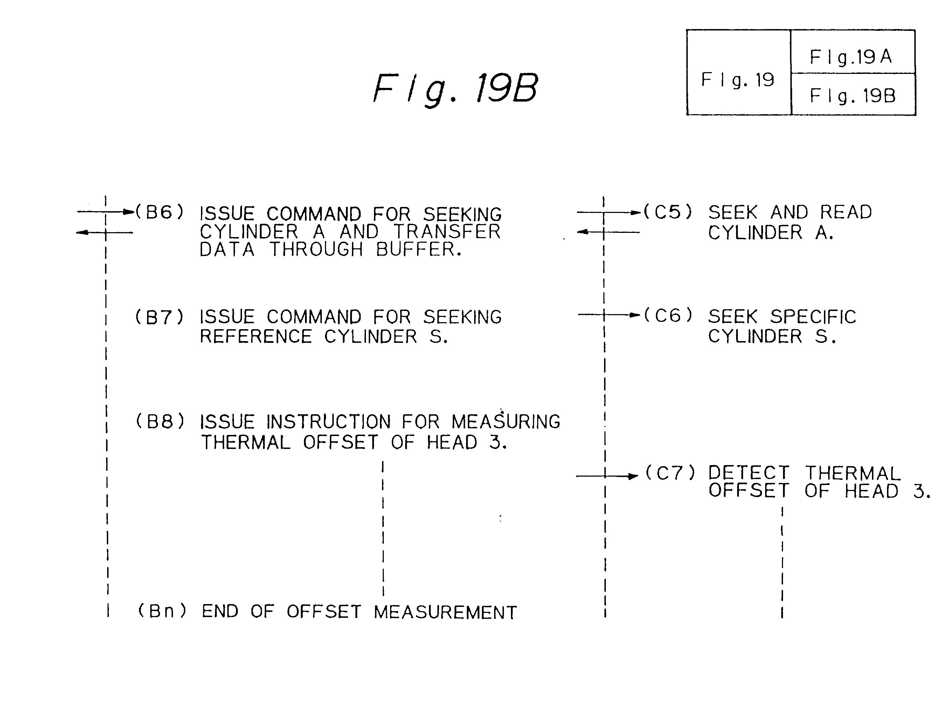

Another example of an offset detection process carried out by the offset detector 75 of the drive control microprocessor 40 of Fig. 13 will be explained with reference to a time chart of Figs. 19A and 19B. In Figs. l9A and l9B, thermal offsets are measured as an example.

When B1 of the command control microprocessor 14 detects measurement start time, B2 issues to the drive control microprocessor 40 a seek instruction as an internal instruction for seeking a specific cylinder S on which a thermal offset is to be detected.

Upon receiving the instruction, C1 of the drive control microprocessor 40 moves the heads onto the specific cylinder.

B3 of the command control microprocessor 14 provides an internal command to cause the drive control microprocessor 40 measure a thermal offset of a head 0.

Upon receiving the instruction, C2 of the drive control microprocessor 40 detects the thermal offset of the head 0. Namely, the microprocessor 40 selects the data head 0, reads signals V_{A} and V_{B} on the servo information items A and B on the data surface with the selected data head, obtains a differential signal (V_{A} -V_{B}) of the read signals V_{A} and V_{B}, and calculates an offset α by multiplying the differential signal by a given proportional coefficient K.

B4 and B5 sequentially provide offset measuring instructions for heads 1 and 2, and C3 and C4 measure the offsets.

During the offset detection in C4 according to the offset measuring instruction for the head 2 provided by B5, A1 of the host unit 90 issues a read command for a cylinder A.

Upon receiving this read command, the command control microprocessor 14 waits for the completion of the offset detection of C4 for the head 2, and issues a seek command for the cylinder A in B6 according to the host-unit command. Then, C5 seeks the cylinder A. Namely, the offset measurement (offset detection process) is interrupted at C5.

When the cylinder A is sought and the heads are ontrack there, data is read and transferred to the host unit 90 through a buffer.

When the host-unit read command is completed, B7 issues a seek command for the specific cylinder S, and C6 seeks the specific cylinder S. Then, to resume the interrupted offset measurement (offset detection process), B8 issues an offset measuring instruction for the next head 3, and C7 detects an offset of the head 3.

The offset detection is repeated up to the last head n. Bn completes a series of the offset measurements, and a normal process is resumed.

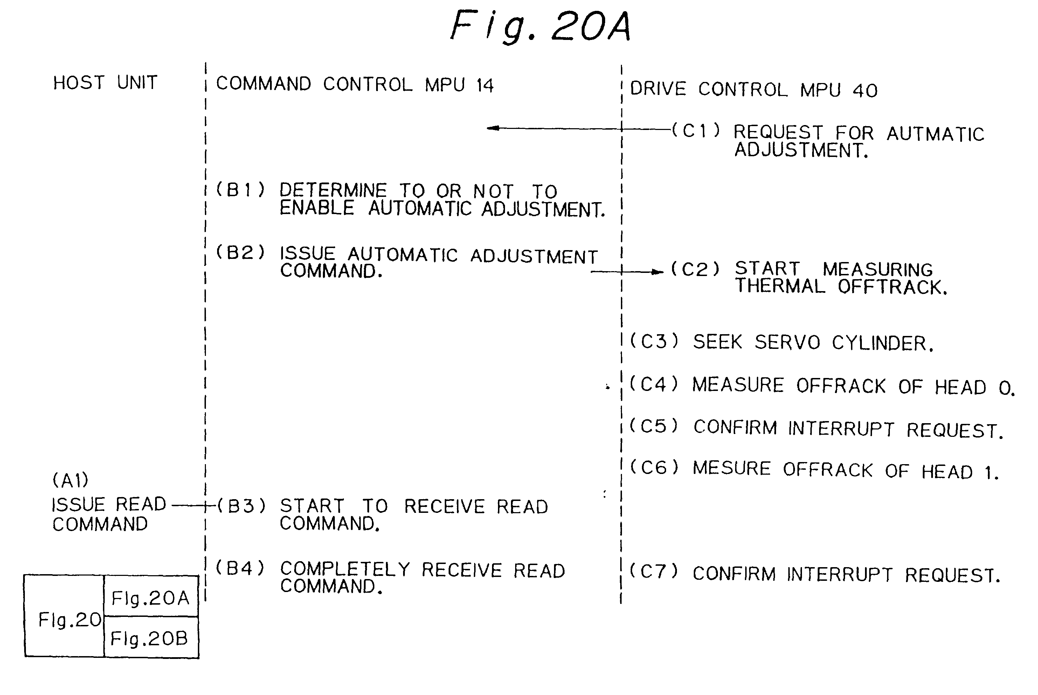

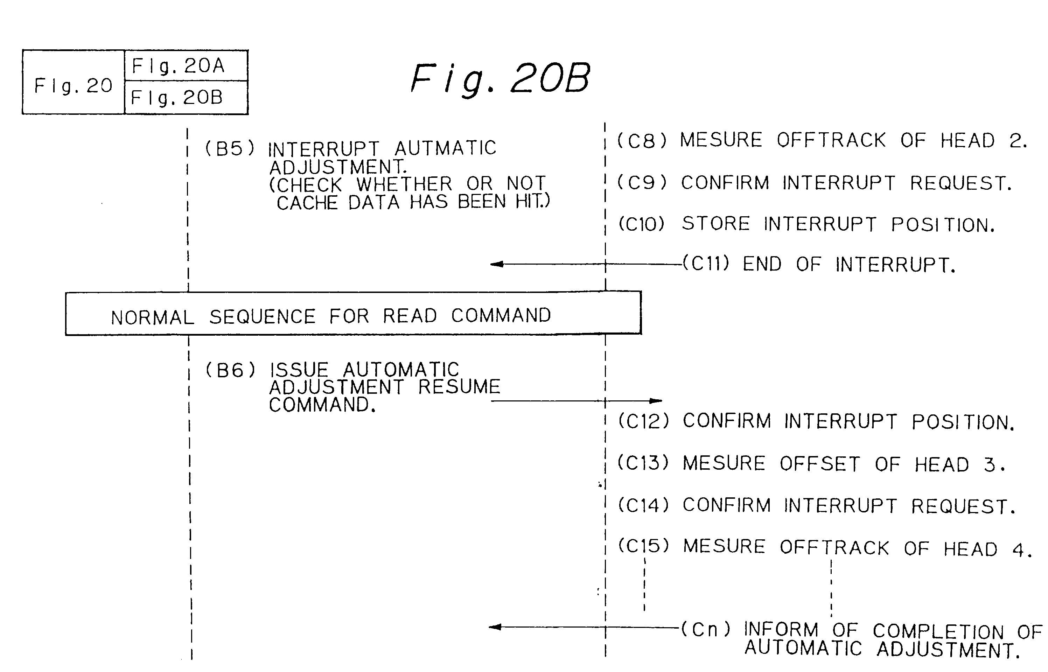

Figures 20A and 20B together present a time chart showing an alternative offset detecting process which circuitry embodying the invention can perform. This process also measures thermal offsets as an example. In the figure, "automatic adjustment" means the offset detecting process.

In the process of Figs. 20A and 20B, the drive control microprocessor 40 sets measurement timing and starts an interrupt process for a host-unit command after receiving an instruction from the command control microprocessor 14.

Unlike in the process of Figs. l9A and 19B, the drive control microprocessor 40 of this embodiment has an intelligent function for offset measurement.

In B1 to B6 and C1 to Cn, the command control microprocessor 14 and drive control microprocessor 40 send and receive internal commands to detect offsets, interrupt the offset detection process upon receiving a host-unit command, and resume the offset detection process upon the completion of the host-unit command.

In another embodiment of the invention, resumption of the offset measurement in B7 of Figs. 19A and l9B and B6 of Figs. 20A and 20B may be achieved only when the host unit 90 does not issue a command for at least a predetermined time after the completion of the preceding host-unit command.

If the host unit 90 issues commands at random temporal positions, the offset measurement may be resumed upon the completion of a presently processed host-unit command with no problem. If the host unit sequentially issues write or read commands, however, the host-unit commands and the offset measurement will be alternately carried out, resulting in deterioration of the sequential access efficiency.

Accordingly, the offset measurement is only resumed if no host-unit command is issued a predetermined time, for example 1 ms, after the completion of the present host-unit command.

Namely, the offset measurement will not be resumed after the end of each host-unit command if it is a sequential access, thereby preventing a deterioration in processing performance of the sequential access.

The numbers of magnetic disks and heads in the above embodiments are only examples, and they will be determined in practice in accordance with the particular requirements of each data processing installation.

In the above embodiments, the servo surface is formed on an end of one of a plurality of disks. The servo surface may be formed on a centre disk or on any other disk.

As explained above, a magnetic disk drive unit embodying the present invention includes circuitry which carries out an offset detection process, in which, for each head in turn, an offset of the head concerned is measured according to servo information recorded on a data surface associated with the head.

Execution of the offset detection process can be interrupted upon receipt of a host-unit command during the process, and the host-unit command can then be executed first, thereby preventing a deterioration of processing performance due to the offset measurement.

The offset of each head may be measured in any suitable way, but one preferred way that can be effective, irrespective of fluctuations in the outputs of data heads, is to forcibly offset each data head, actually read signals through each data head, and according to the read signals, obtain proportional coefficients that are representative of the sensitivities of the data heads. Thereafter, the circuitry correctly detects data head offsets, i.e., deviations between a servo surface and data surfaces caused by a change in ambient temperature. The circuitry thus accurately carries out a write or read offset correction to realize precise ontrack control.

## Claims

1. A magnetic disk drive unit including:
magnetic disks (1) having respective data storage surfaces arranged coaxially with one another at intervals along a common rotary support shaft, one of the said data storage surfaces being used as a servo surface storing first predetermined servo information and the other data storage surfaces being read/write surfaces used for storing data applied to the unit, a plurality of those read/write surfaces being used also for storing second predetermined servo information (A,B);
a servo head (34) arranged in opposition to the said servo surface, and moveable thereover, for reading therefrom the said first predetermined servo information;
read/write heads (2) arranged respectively in opposition to the said read/write surfaces for reading data from those surfaces or writing data thereon, which heads together with the said servo head (34) are carried by a common support structure controllable to move the heads between different data tracks on the respective opposed read/write surfaces when the unit is in use;
control means (14) for controlling operation of the unit;
head offset detecting circuitry (3,4,5,6) connected with the said servo head (34) and with the said read/write heads (2) and operable, in response to a predetermined control signal applied to the circuitry, to initiate an offset detection process in which signals (V_{A},V_{B}) derived from the said first and second predetermined servo information are processed to produce, for each in turn of the said read/write heads (2) arranged in opposition respectively to the surfaces of the said plurality, a measure (OF1,...OFn) of the distance by which the read/write head concerned is offset from the said servo head (34);
characterised by interrupt means (95) operable if, during the course of the said offset detection process, the said control means (14) receives a command calling for a preselected operation, of a type different from the said offset detection process, to cause execution of that process to be suspended upon production of the said measure (OFx) for the head being dealt with when the said command is received, whereafter the said preselected operation is executed, and to cause the said offset detection process to be resumed after completion of execution of that operation.

2. A magnetic disk drive unit as claimed in claim 1, wherein the said control means (14) are adapted for connection to a host unit (90) to receive therefrom commands specifying the operations to be performed by the magnetic disk drive unit, and include:
command control means for decoding the commands received from the host unit (90) and for generating internal commands in dependence upon the commands received from the host unit;
drive control means (40) for performing head positioning control for the magnetic disks (1) according to the generated internal commands; and
measurement timing setting means (94) connected with the said head offset detecting circuitry (3;75) and operable to apply thereto the said predetermined control signal, for initiating such an offset detection process, in accordance with a predetermined time schedule;
the said interrupt means (95) being operable, when the command received from the host unit (90) is decoded by the command control means (14) and found to be an access command such as a read or write command, to bring about the suspension of the offset detection process and to execute the access command and, on completion of the operation(s) required by the access command, to bring about the resumption of the offset detection process.

3. A magnetic disk drive unit as claimed in claim 2, wherein the said measurement timing setting means (94) are operable, just after a power source of the unit is turned on, to apply the said predetermined control signal to the said head offset detecting circuitry (3; 75) at intervals dependent upon changes in ambient temperature.

4. A magnetic disk drive unit as claimed in any preceding claim, wherein the said interrupt means (95) are operable to bring about resumption of the offset detection process only if no further command is received by the control means (14) during a predetermined time period commencing upon completion of the execution of the preceding command calling for the said preselected operation.

5. A magnetic disk drive unit as claimed in any preceding claim, wherein:
the said second predetermined servo information (A, B) includes a first item of information (A) that is offset to a predetermined extent (X) to one side of an intended tracking line and a second item of information (B) that is offset to a predetermined extent (X) to the other side of the said intended tracking line;
in the said offset detection process, the read/write head (2) whose offset is to be measured is moved to an assumed ontrack position based on signals derived by the said servo head (34) from the said first predetermined servo information stored on the said servo surface; and
the said head offset detection circuitry (3; 75) is operable to process signals (V_{A}, V_{B}) derived respectively from the said first and second items of information (A, B) when the read/write head (2) concerned is in the said assumed ontrack position to produce a difference signal (V_{A} - V_{B}), and to multiply that difference signal (V_{A} - V_{B}) by a proportional coefficient (K) for the read/write head concerned to provide the said measure (OFx) for that head.

6. An offset detecting method, for use in a magnetic disk drive unit including: magnetic disks (1) having respective data storage surfaces arranged coaxially with one another at intervals along a common rotary support shaft, one of the said data storage surfaces being used as a servo surface storing first predetermined servo information and the other data storage surfaces being read/write surfaces used for storing data applied to the unit, a plurality of those read/write surfaces being used also for storing second predetermined servo information (A,B); a servo head (34) arranged in opposition to the said servo surface, and movable thereover, for reading therefrom the said first predetermined servo information; and read/write heads (2) arranged respectively in opposition to the said read/write surfaces for reading data from those surfaces or writing data thereon, which heads together with the said servo head (34) are carried by a common support structure controllable to move the heads between different data tracks on the respective opposed read/write surfaces when the unit is in use;
in which method signals (V_{A}, V_{B}) derived from the said first and second predetermined servo information (A,B) are processed to produce, for each in turn of the said read/write heads (2) arranged in opposition respectively to the surfaces of the said plurality, a measure (OF1,...OFn) of the distance by which the read/write head concerned is offset from the said servo head (34);
characterised in that if, during the course of the offset detection method, the unit receives a command calling for a preselected operation, of a type different from the said offset detection method, execution of the method is caused to be suspended upon production of the said measure (OFx) for the head being dealt with when the said command is received, whereafter the said preselected operation is executed, the offset detection method being resumed after completion of execution of that operation.

## Patentansprüche

1. Magnetplattenlaufwerkseinheit mit:
Magnetplatten (1), die jeweilige Datenspeicheroberflächen haben und in Abständen längs eines gemeinsamen Rotationsstützschaftes koaxial zueinander angeordnet sind, bei denen eine der Datenspeicheroberflächen als Servooberfläche verwendet wird, die erste vorbestimmte Servoinformationen speichert, und die anderen Datenspeicheroberflächen Lese/Schreiboberflächen sind, die zum Speichern von Daten verwendet werden, die auf die Einheit angewendet werden, wobei eine Vielzahl von jenen Lese-/Schreiboberflächen auch zum Speichern von zweiten vorbestimmten Servoinformationen (A, B) verwendet wird;
einem Servokopf (34), der gegenüber der Servooberfläche angeordnet ist und über sie hinweg beweglich ist, zum Lesen der ersten vorbestimmten Servoinformationen von ihr;
Lese-/Schreibköpfen (2), die jeweilig gegenüber den Lese-/Schreiboberflächen angeordnet sind, zum Lesen von Daten von jenen Oberflächen oder Schreiben von Daten auf sie, welche Köpfe zusammen mit dem Servokopf (34) durch eine gemeinsame Stützstruktur gehalten werden, die steuerbar ist, um die Köpfe zwischen verschiedenen Datenspuren auf den jeweiligen gegenüberliegenden Lese-/Schreiboberflächen zu bewegen, wenn die Einheit in Gebrauch ist;
einem Steuermittel (14) zum Steuern der Operation der Einheit;
einer Kopfversetzungsdetektionsschaltungsanordnung (3, 4, 5, 6), die mit dem Servokopf (34) und mit den Lese/Schreibköpfen (2) verbunden ist und als Reaktion auf ein vorbestimmtes Steuersignal, das auf die Schaltungsanordnung angewendet wird, betriebsfähig ist, um einen Versetzungsdetektionsprozeß zu initiieren, bei dem Signale (V_{A}, V_{B}), die aus den ersten und zweiten vorbestimmten Servoinformationen abgeleitet werden, verarbeitet werden, um der Reihe nach für jeden der Lese-/Schreibköpfe (2), die jeweilig gegenüber den Oberflächen von der Vielzahl angeordnet sind, ein Maß (OF1, ... OFn) des Abstandes zu erzeugen, um den der betreffende Lese-/Schreibkopf von dem Servokopf (34) versetzt ist;
gekennzeichnet durch ein Unterbrechungsmittel (95), das betriebsfähig ist, falls während des Verlaufs des Versetzungsdetektionsprozesses das Steuermittel einen Befehl empfängt, der zu einer vorgewählten Operation aufruft, mit einem Typ, der sich von dem Versetzungsdetektionsprozeß unterscheidet, um zu bewirken, daß die Ausführung jenes Prozesses bei Erzeugung des genannten Maßes (OFx) für den Kopf, der gerade behandelt wird, wenn der genannte Befehl empfangen wird, ausgesetzt wird, woraufhin die vorgewählte Operation ausgeführt wird, und um zu bewirken, daß der Versetzungsdetektionsprozeß nach Vollendung der Ausführung jener Operation wieder aufgenommen wird.

2. Magnetplattenlaufwerkseinheit nach Anspruch 1, bei der das Steuermittel (14) zur Verbindung mit einer Hosteinheit (90) ausgelegt ist, um von ihr Befehle zu empfangen, die die Operationen spezifizieren, die durch die Magnetplattenlaufwerkseinheit auszuführen sind, und enthält:
ein Befehlssteuermittel zum Decodieren der Befehle, die von der Hosteinheit (90) empfangen werden, und zum Erzeugen von internen Befehlen in Abhängigkeit von den Befehlen, die von der Hosteinheit empfangen werden;
ein Treibsteuermittel (40) zum Ausführen der Kopfpositionssteuerung für die Magnetplatten (1) gemäß den erzeugten internen Befehlen; und
ein Meßzeitlageneinstellmittel (94), das mit der Kopfversetzungsdetektionsschaltungsanordnung (3; 75) verbunden ist und betriebsfähig ist, um auf sie das genannte vorbestimmte Steuersignal anzuwenden, zum Initiieren solch eines Versetzungsdetektionsprozesses gemäß einem vorbestimmten Zeitplan;
welches Unterbrechungsmittel (95) betriebsfähig ist, wenn der Befehl, der von der Hosteinheit (90) empfangen wird, durch das Befehlssteuermittel (14) decodiert wird und wenn festgestellt wird, daß es ein Zugriffsbefehl wie ein Lese- oder Schreibbefehl ist, um die Aussetzung des Versetzungsdetektionsprozesses zu bewirken und den Zugriffsbefehl auszuführen und, bei Vollendung der Operation(en), die durch den Zugriffsbefehl erforderlich ist (sind), die Wiederaufnahme des Versetzungsdetektionsprozesses zu bewirken.

3. Magnetplattenlaufwerkseinheit nach Anspruch 2, bei der das Meßzeitlageneinstellmittel (94) betriebsfähig ist, gerade nachdem eine Energiequelle der Einheit eingeschaltet ist, um das genannte vorbestimmte Steuersignal auf die Kopfversetzungsdetektionsschaltungsanordnung (3; 75) in Abständen anzuwenden, die von Veränderungen der Umgebungstemperatur abhängen.

4. Magnetplattenlaufwerkseinheit nach irgendeinem vorhergehenden Anspruch, bei der das Unterbrechungsmittel (95) betriebsfähig ist, um die Wiederaufnahme des Versetzungsdetektionsprozesses nur zu bewirken, falls kein weiterer Befehl durch das Steuermittel (14) während einer vorbestimmten Zeitdauer empfangen wird, die bei Vollendung der Ausführung des vorhergehenden Befehls beginnt, der zu der genannten vorgewählten Operation aufruft.

5. Magnetplattenlaufwerkseinheit nach irgendeinem vorhergehenden Anspruch, bei der:
die zweiten vorbestimmten Servoinformationen (A, B) ein erstes Informationselement (A) enthalten, das mit einem vorbestimmten Betrag (X) zu einer Seite einer beabsichtigten Spurverfolgungslinie versetzt ist, und ein zweites Informationselement (B), das mit einem vorbestimmten Betrag (X) zu der anderen Seite der beabsichtigten Spurverfolgungslinie versetzt ist;
der Lese-/Schreibkopf (2), dessen Versetzung zu messen ist, bei dem Versetzungsdetektionsprozeß zu einer angenommenen Auf-Spur-Position bewegt wird, die auf Signalen basiert, die durch den Servokopf (34) aus den ersten vorbestimmten Servoinformationen abgeleitet werden, die auf der Servooberfläche gespeichert sind; und
die Kopfversetzungsdetektionsschaltungsanordnung (3; 75) betriebsfähig ist, um Signale (V_{A}, V_{B}) zu verarbeiten, die jeweilig von den ersten und zweiten Informationselementen (A, B) abgeleitet werden, wenn der betreffende Lese/Schreibkopf (2) auf der angenommenen Auf-Spur-Position ist, um ein Differenzsignal (V_{A} - V_{B}) zu erzeugen und jenes Differenzsignal (V_{A} - V_{B}) mit einem Proportionalkoeffizienten (K) für den betreffenden Lese-/Schreibkopf zu multiplizieren, um für jenen Kopf das genannte Maß (OFx) vorzusehen.

6. Versetzungsdetektionsverfahren zur Verwendung in einer Magnetplattenlaufwerkseinheit, die enthält: Magnetplatten (1), die jeweilige Datenspeicheroberflächen haben und in Abständen längs eines gemeinsamen Rotationsstützschaftes koaxial zueinander angeordnet sind, bei denen eine der Datenspeicheroberflächen als Servooberfläche verwendet wird, die erste vorbestimmte Servoinformationen speichert, und die anderen Datenspeicheroberflächen Lese-/Schreiboberflächen sind, die zum Speichern von Daten verwendet werden, die auf die Einheit angewendet werden, wobei eine Vielzahl von jenen Lese-/Schreiboberflächen auch zum Speichern von zweiten vorbestimmten Servoinformationen verwendet wird; einen Servokopf (34), der gegenüber der Servooberfläche angeordnet ist und über sie hinweg beweglich ist, zum Lesen der ersten vorbestimmten Servoinformationen von ihr; und Lese-/Schreibköpfe (2), die jeweilig gegenüber den Lese/Schreiboberflächen angeordnet sind, zum Lesen von Daten von jenen Oberflächen oder Schreiben von Daten auf sie, welche Köpfe zusammen mit dem Servokopf (34) durch eine gemeinsame Stützstruktur gehalten werden, die steuerbar ist, um die Köpfe zwischen verschiedenen Datenspuren auf den jeweiligen gegenüberliegenden Lese-/Schreiboberflächen zu bewegen, wenn die Einheit in Gebrauch ist;
bei welchem Verfahren Signale (V_{A}, V_{B}), die aus den ersten und zweiten vorbestimmten Servoinformationen (A, B) abgeleitet werden, verarbeitet werden, um der Reihe nach für jeden der Lese-/Schreibköpfe (2), die jeweilig gegenüber den Oberflächen von der Vielzahl angeordnet sind, ein Maß (OF1, ... OFn) des Abstandes zu erzeugen, um den der betreffende Lese-/Schreibkopf von dem Servokopf (34) versetzt ist;
dadurch gekennzeichnet, daß bewirkt wird, falls während des Verlaufs des Versetzungsdetektionsverfahrens die Einheit einen Befehl empfängt, der zu einer vorgewählten Operation aufruft, mit einem Typ, der sich von dem Versetzungsdetektionsverfahren unterscheidet, daß die Ausführung jenes Verfahrens bei Erzeugung des genannten Maßes (OFx) für den Kopf, der gerade behandelt wird, wenn der genannte Befehl empfangen wird, ausgesetzt wird, woraufhin die vorgewählte Operation ausgeführt wird, wobei das Versetzungsdetektionsverfahren nach Vollendung der Ausführung jener Operation wieder aufgenommen wird.

## Revendications

1. Unité de lecteur de disque magnétique incluant :
des disques magnétiques (1) comportant des surfaces de stockage de données respectives, agencés coaxialement les uns par rapport aux autres selon des intervalles le long d'un arbre de support tournant commun, l'une desdites surfaces de stockage de données étant utilisée en tant que surface d'asservissement qui stocke une première information d'asservissement prédéterminée et les autres surfaces de stockage de données étant des surfaces de lecture/écriture utilisées pour stocker des données appliquées sur l'unité, une pluralité de ces surfaces de lecture/écriture étant utilisées également pour stocker une seconde information d'asservissement prédéterminée (A, B) ;
une tête d'asservissement (34) agencée de manière à faire face à ladite surface d'asservissement et pouvant se déplacer au-dessus pour lire à partir de celle-ci ladite première information d'asservissement prédéterminée ;
des têtes de lecture/écriture (2) agencées respectivement de manière à faire face auxdites surfaces de lecture/écriture pour lire des données à partir de ces surfaces ou écrire des données dessus, lesquelles têtes en association avec ladite tête d'asservissement (34) sont supportées par une structure de support commune pouvant être commandée pour déplacer les têtes entre différentes pistes de données sur les surfaces de lecture/écriture faisant face respectives lorsque l'unité est en utilisation ;
un moyen de commande (14) pour commander le fonctionnement de l'unité ;
un circuit de détection de décalage de tête (3, 4, 5, 6) connecté à ladite tête d'asservissement (34) et auxdites têtes de lecture/écriture (2) et pouvant fonctionner, en réponse à un signal de commande prédéterminé appliqué sur le circuit, pour initier un processus de détection de décalage selon lequel des signaux (V_{A}, V_{B}) dérivés à partir desdites première et seconde informations d'asservissement prédéterminées sont traités afin de produire, pour tour à tour chacune desdites têtes de lecture/écriture (2) agencées de manière à faire face respectivement aux surfaces de ladite pluralité, une mesure (OF1,... OFn) de la distance dont la tête de lecture/écriture concernée s'est décalée par rapport à ladite tête d'asservissement (34),
caractérisée par un moyen d'interruption (95) pouvant fonctionner si, au cours dudit processus de détection de décalage, ledit moyen de commande (14) reçoit une commande appelant une opération présélectionnée, d'un type différent dudit processus de détection de décalage, pour provoquer une suspension de l'exécution de ce processus suite à la production de ladite mesuré (OFx) pour la tête qui est traitée lorsque ladite commande est reçue, suite à quoi ladite opération présélectionnée est exécutée, et pour provoquer la reprise dudit processus de détection de décalage après la fin de l'exécution de cette opération.

2. Unité de lecteur de disque magnétique selon la revendication 1, dans lequel ledit moyen de commande (14) est adapté pour une connexion à une unité hôte (90) pour en recevoir des commandes spécifiant les opérations à réaliser par l'unité de lecteur de disque magnétique et inclut :
un moyen de contrôle de commande pour décoder des commandes reçues depuis l'unité hôte (90) et pour générer des commandes internes en fonction des commandes reçues depuis l'unité hôte ;
un moyen de commande de lecteur (40) pour réaliser une commande de positionnement de tête pour les disques magnétiques (1) conformément aux commandes internes générées ; et
un moyen d'établissement de cadencement de mesure (94) connecté audit circuit de détection de décalage de tête (3 ; 75) et pouvant fonctionner pour appliquer dessus ledit signal de commande prédéterminé pour initier un tel processus de détection de décalage conformément à une planification temporelle prédéterminée ;
ledit moyen d'interruption (95) pouvant être activé, lorsque la commande reçue depuis l'unité hôte (90) est décodée par le moyen de contrôle de commande (14) et qu'elle s'avère être une commande d'accès telle qu'une commande de lecture ou d'écriture pour induire la suspension du processus de détection de décalage et pour exécuter la commande d'accès et suite à la fin de l'opération ou des opérations requises du fait de la commande d'accès, pour induire la reprise du processus de détection de décalage.

3. Unité de lecteur de disque magnétique selon la revendication 2, dans lequel ledit moyen d'établissement de cadencement de mesure (94) peut fonctionner juste après qu'une source d'alimentation de l'unité est activée pour appliquer ledit signal de commande prédéterminé sur ledit circuit de détection de décalage de tête (3 ; 75) selon des intervalles qui dépendent des variations de la température ambiante.

4. Unité de lecteur de disque magnétique selon l'une quelconque des revendications précédentes, dans lequel ledit moyen d'interruption (95) peut fonctionner pour induire une reprise du processus de détection de décalage seulement si aucune autre commande n'est reçue par le moyen de commande (14) pendant une période temporelle prédéterminée qui commence suite à la fin de l'exécution de la commande précédente appelant ladite opération présélectionnée.

5. Unité de lecteur de disque magnétique selon l'une quelconque des revendications précédentes, dans laquelle :
ladite seconde information d'asservissement prédéterminée (A, B) inclut un premier élément d'information (A) qui est décalé jusqu'à une étendue prédéterminée (X) sur un côté d'une ligne de suivi de piste attendue et un second élément d'information (B) qui est décalé jusqu'à une étendue prédéterminée (X) sur l'autre côté de ladite ligne de suivi de piste attendue ;
lors dudit processus de détection de décalage, la tête de lecture/écriture (2) dont un décalage doit être mesuré est déplacée jusqu'à une position sur piste supposée sur la base de signaux dérivés par ladite tête d'asservissement (34) à partir de ladite première information d'asservissement prédéterminée stockée sur ladite surface d'asservissement ; et
ledit circuit de détection de décalage de tête (3 ; 75) peut fonctionner pour traiter des signaux (V_{A} - V_{B}) dérivés respectivement à partir desdits premier et second éléments d'information (A, B) lorsque la tête de lecture/écriture (2) concernée est à ladite position de sur piste supposée pour produire un signal de différence (V_{A} - V_{B}) et pour multiplier ce signal de différence (V_{A} - V_{B}) par un coefficient proportionnel (K) pour la tête de lecture/écriture concernée afin de produire ladite mesure (OFx) pour cette tête.

6. Procédé de détection de décalage pour une utilisation dans une unité de lecteur de disque magnétique incluant : des disque magnétiques (1) comportant des surfaces de stockage de données respectives, agencés coaxialement les uns par rapport aux autres selon des intervalles le long d'un arbre de support tournant commun, l'une desdites surfaces de stockage de données étant utilisée en tant que surface d'asservissement qui stocke une première information d'asservissement prédéterminée et les autres surfaces de stockage de données étant des surfaces de lecture/écriture utilisées pour stocker des données appliquées sur l'unité, une pluralité de ces surfaces de lecture/écriture étant utilisées également pour stocker une seconde information d'asservissement prédéterminée (A, B) ; une tête d'asservissement (34) agencée de manière à faire face à ladite surface d'asservissement et pouvant se déplacer au-dessus pour lire à partir de celle-ci ladite première information d'asservissement prédéterminée ; et des têtes de lecture/écriture (2) agencées respectivement de manière à faire face auxdites surfaces de lecture/écriture pour lire des données à partir de ces surfaces ou écrire des données dessus, lesquelles têtes en association avec ladite tête d'asservissement (34) sont supportées par une structure de support commune pouvant être commandée pour déplacer les têtes entre différentes pistes de données sur les surfaces de lecture/écriture faisant face respectives lorsque l'unité est en utilisation ;
procédé selon lequel des signaux (V_{A} - V_{B}) dérivés à partir desdites première et seconde informations d'asservissement prédéterminées (A, B) sont traités afin de produire pour tour à tour chacune desdites têtes de lecture/écriture (2) agencées de manière à faire face respectivement aux surfaces de ladite pluralité, une mesure (OF1,... OFn) de la distance dont la tête de lecture/écriture concernée s'est décalée par rapport à ladite tête d'asservissement (34),
caractérisé en ce que, si, pendant le déroulement du procédé de détection de décalage, l'unité reçoit une commande appelant une opération présélectionnée, d'un type différent dudit procédé de détection de décalage, elle provoque une suspension de l'exécution de ce procédé suite à la production de ladite mesure (OFx) pour la tête qui est traitée lorsque ladite commande est reçue, suite à quoi ladite opération présélectionnée est exécutée, le procédé de détection de décalage étant repris après la fin de l'exécution de cette opération.
